Europäisches Patentamt

European Patent Office

Office européen des brevets

(11) Veröffentlichungsnummer : **0 215 443**
**B1**

(12) EUROPÄISCHE PATENTSCHRIFT

(45) Veröffentlichungstag der Patentschrift :
28.03.90

(21) Anmeldenummer : 86112542.5

(22) Anmeldetag : 10.09.86

(51) Int. Cl.$^5$ : **B 60 D  1/00**

(54) Halterahmen für eine Anhängekupplung.

(30) Priorität : 17.09.85 DE 3533108

(43) Veröffentlichungstag der Anmeldung :
25.03.87 Patentblatt 87/13

(45) Bekanntmachung des Hinweises auf die Patenterteilung : 28.03.90 Patentblatt 90/13

(84) Benannte Vertragsstaaten :
AT CH DE FR IT LI

(56) Entgegenhaltungen :
EP--A-- 0 095 443
EP--A-- 0 155 338
DE--C--  953 312
US--A-- 2 558 114
N.P. CHIRONIS: "Mechanisms, linkages and mechanical controls", 1965, McGraw-Hill, New York, US; F.
STRASSER: "10 Ways to change straight-line direction"

(73) Patentinhaber : DEERE & COMPANY
1 John Deere Road
Moline, Illinois 61265 (US)

(72) Erfinder : Halabiya, Sabah, Dipl.-Ing.
Schumannstrasse 1
D-6839 Rheinhausen (DE)

(74) Vertreter : Feldmann, Bernhard
DEERE & COMPANY European Office, Patent Department Steubenstrasse 36-42 Postfach 503
D-6800 Mannheim 1 (DE)

**Beschreibung**

Die Erfindung betrifft einen Halterahmen für eine Anhängekupplung, der über Haltebolzen in einem Lochrahmen festlegbar ist, mit einer Betätigungseinrichtung zum Bewegen der Haltebolzen, einem Sicherungselement zum Verriegeln der Betätigungseinrichtung und mit einem Tragegriff, mittels dessen das Sicherungselement betätigbar ist.

Bei diesem Halterahmen (Ingenieurarbeit, Konstruktive Möglichkeiten der Verbesserung von Anhängerkupplungen bei Akkerschleppern v. Ludwig Magin, Fachhochschule des Landes Rheinland Pfalz, Abteilung Kaiserslautern, Fachrichtung Maschinenbau, Seite 34 bis 47) ist der Tragegriff als Drehhebel mit zwei Breit- und zwei Schmalseiten ausgebildet, an denen wahlweise zwei Haltebolzen, die der Festlegung des Halterahmens in dem Lochrahmen dienen und in einem den Drehhebel aufnehmenden Gehäuse verschiebbar gelagert sind, angreifen. Der Drehhebel stellt sogleich auch ein Eingangsglied dar und ist an seinem in dem Gehäuse befindlichen Endbereich mit einem Sicherungsstift versehen, der in am Boden des Gehäuses vorgesehene Arretiernuten unter der Wirkung einer als Druckfeder ausgebildeten Feder gedrückt wird, wenn sich zwischen den Haltebolzen die Breitseiten erstrecken und der Drehhebel nicht angehoben wird. Somit ist der Drehhebel gegen unbeabsichtigtes Drehen arretiert und kann nur durch ein Anheben entsichert und zum Verschieben der Haltebolzen verdreht werden. Der Drehhebel kann angehoben werden, bis er an der inneren oberen Fläche des Gehäuses anliegt und somit auch den Halterahmen mit anheben kann. Die Haltebolzen sind über zwei als Zugfedern ausgeformte Federn aufeinander zugespannt, und zwar derart, daß sie stets an dem Drehhebel anliegen. Durch die Drehung des Drehhebels können die Haltebolzen nun um die Länge der Breitseiten oder um die der Schmalseiten voneinander entfernt werden, wobei sie über den Tragrahmen überstehen und in in dem Lochrahmen vorgesehene Bohrungen eintreten können, wenn der Drehhebel so weit gedreht worden ist, daß sich zwischen den einander zugelegenen Enden der Haltebolzen die Breitseiten erstrecken.

Die der Erfindung zugrunde liegende Aufgabe wird darin gesehen, diesen bekannten Halterahmen noch so weit weiterzuentwickeln, daß während des Verdrehens des Drehhebels eine von dem Gewicht des Halterahmens und der damit verbundenen Anhängekupplung herrührende Reibkraft nicht mehr auf die Drehbewegung einwirkt.

Diese Aufgabe ist erfindungsgemäß dadurch gelöst worden, daß die Betätigungseinrichtung funktionell getrennt von dem Tragegriff ausgebildet ist.

Auf diese Weise kann zunächst der Halterahmen, ohne eine Kraft auf ihn einzuleiten, ergriffen und anschließend unabhängig davon die Betätigungseinrichtung bedient werden. Der Tragegriff ist mit dem Halterahmen nicht funktionell verbunden, so daß bei seiner Betätigung, insbesondere bei dessen Verschwenken, nur eine vernachlässigbar kleine Reibung zwischen dem Halterahmen und dem Tragegriff entsteht, die nicht ausreicht, um den Halterahmen gegenüber dem Lochrahmen zu kippen, so daß die Haltebolzen bei deren anschließendem Verschieben nicht verkanten und nicht klemmen. Die Haltebolzen können durch Anheben und gegebenenfalls durch ein geringfügiges Bewegen des Halterahmens relativ zu dem Lochrahmen entlastet werden. Da der Tragegriff das gesamte Gewicht des Halterahmens und der Anhängekupplung aufnimmt, kann die Betätigungseinrichtung losgelöst von dieser Gewichtsbelastung bedient werden, so daß an ihr nur der zum Verschieben der Haltebolzen an sich vorhandene Widerstand überwunden werden muß. Ferner wird ein zu häufiges Bedienen der Betätigungseinrichtung vermieden, da, falls der Halterahmen mit der Anhängekupplung transportiert und entfernt von dem Lochrahmen abgelegt wird, die gesamte aus dem Halterahmen und der Anhängekupplung bestehende Einheit einfach mittels des Tragegriffes ohne Einwirkung auf die Betätigungseinrichtung gehandhabt werden kann.

In hervorragender Weise wird eine automatische Entsicherung der Betätigungseinrichtung beim üblichen Ergreifen des Halterahmens dadurch erreicht, daß das Sicherungselement einen Sicherungsteil aufweist, der mit dem Tragegriff verbunden ist, wobei im Gegensatz zum Stand der Technik lediglich durch das Entsichern mittels einer Verlagerung des Tragegriffes die Betätigungseinrichtung noch nicht verstellt wird. Die Verbindung könnte über ein Gestänge oder, wie nach Anspruch 7 vorgesehen ist, direkt erfolgen.

Sowohl aus Gründen der Sicherheit wie auch aus Gründen der Bequemlichkeit ist es bei einem Halterahmen, dessen Haltebolzen unter Einwirkung mindestens einer Feder stehen, nützlich, wenn die Feder derart angeordnet ist, daß sie die Haltebolzen stets in Richtung auf den Lochrahmen drückt. Dieses Merkmal sorgt dafür, daß bei einem Loslassen der Betätigungseinrichtung die Haltebolzen unmittelbar in in dem Lochrahmen vorgesehene Bohrungen eingeschoben werden, weshalb es, falls der gesamte Halterahmen entgleitet, durch die Haltebolzen, die in die nächste Bohrung eingreifen, aufgefangen wird, oder, falls der Halterahmen mit dem Haltebolzen bereits in die unmittelbare Nähe bestimmter Bohrungen gebracht worden ist, durch geringfügiges Auf- bzw. Abbewegen in dem Lochrahmen arretiert werden kann. Eine von vornherein exakte Positionierung des Halterahmens in dem Lochrahmen ist also nicht erforderlich.

Es ist ferner von Vorteil, wenn, wie es nach Anspruch 4 vorgesehen ist, außer den Haltebolzen auch die gesamte Betätigungseinrichtung in ihre Ausgangsstellung, d. h. in die Stellung, in der der Halterahmen in dem Lochrahmen festgelegt ist, zurückgeführt wird, so daß sich daran gegebenenfalls sofort ein neuer Verstellvorgang des Halterahmens anschließen kann.

Eine Vereinfachung der Bewegungen zum Verstellen ergibt sich dann, wenn die hierzu erforderlichen Bewegungen in einer Ebene ablaufen, wie sich dies aus der Verwirklichung der Merkmale des Anspruches 5 ergibt.

Als Fortentwicklung der Erfindung ist im Gegensatz zu dem bekannten Halterahmen, bei dem das Eingangsglied gegenüber einem die Haltebolzen aufnehmenden Gehäuse beweglich ist und sich aus dem Gehäuse durch eine Öffnung heraus erstreckt, vorgesehen, daß die Öffnung das Eingangsglied dichtend umfaßt und einen dem Querschnitt des Eingangsgliedes im Austrittsbereich aus dem Gehäuse entsprechenden Öffnungsquerschnitt aufweist. Dieses Merkmal verhindert zuverlässig das Eintreten von Schmutz und Wasser in das Gehäuse hin zu den sich bewegenden Teilen. Es ist somit also sichergestellt, daß die sich in dem Gehäuse befindlichen Teile nicht festrosten oder aufgrund von eintretendem Schmutz festsitzen, wobei gegebenenfalls zwischen dem Gehäuse und dem Eingangsglied eine Dichtung vorgesehen werden könnte.

Eine baulich einfache Sicherung, mit der verhindert wird, daß die Betätigungseinrichtung unbeabsichtigt bedient werden kann, ist durch die Merkmale des Anspruches 3 gekennzeichnet. Bemerkenswert ist, daß sich die darin vorgesehene Abflachung und die Einbuchtung innerhalb des Gehäuses befinden können, so daß sie sich nicht mit Schmutz zusetzen oder durch äußere Krafteinwirkung beschädigt werden können, wodurch ein zuverlässig funktionierendes Sicherungselement gegeben ist.

Zum Festlegen des Tragegriffes mittels einer Arretierung mit Bezug auf den Halterahmen, insbesondere in einer Betriebsstellung, derart, daß er dann oberhalb des Schwerpunktes der gesamten Einheit zu liegen kommt, ist nach einem weiteren Vorschlag zu der Erfindung vorgesehen, daß die Arretierung aus einem sich tangential von dem Haltegriff, insbesondere von dessen Sicherungsteil, forterstreckenden Bolzen und einem an dem Gehäuse angeordneten Nocken besteht.

Auf eine einfache Weise wird eine Übertragung der Bewegung des Eingangsgliedes auf die Haltebolzen dadurch bewirkt, daß die Schwenkhebel als Winkelhebel ausgebildet sind und über jeweils einen Lenker schwenkbar an dem längsverschiebbar angeordneten Eingangsglied angreifen, wobei sich die Lenker stets in einer zu der Bewegungsrichtung des Eingangsglieds angewinkelt verlaufenden Richtung erstrecken. Die Schwenkhebel können zusätzlich mit Längsschlitzen versehen sein, so daß sie beim Verschwenken keine Radialbelastung auf die Haltebolzen ausüben. Insbesondere durch die Anordnung der Lenker können sich in dem somit gebildeten Gestänge keine Totpunktlage oder unbestimmte Bewegungsverhältnisse ergeben.

Ein automatisches Verschieben der Haltebolzen in ihre Betriebsstellung beim Loslassen der Betätigungseinrichtung wird über die Schwenkhebel durch die Merkmale gemäß dem Anspruch 12 erreicht, wobei deren Stellung gemäß Anspruch 13 zusätzlich zu der Stellung des Eingangsgliedes durch eine Sicherheitskennzeichnung angezeigt werden kann, so daß eine Bedienungsperson sicher und unverzüglich erkennen kann, ob die Haltebolzen in den Lochrahmen vollkommen oder nur teilweise eingedrungen sind.

Durch die Ausbildung des Halterahmens, wie nach einer weiteren Idee zu der Erfindung nach den Ansprüchen 14 bzw. 15 vorgesehen ist, kann eine Einhandbedienung des Halterahmens zum Höhenverstellen der Anhängekupplung erreicht werden. Dies ist deshalb möglich, weil die Bedienungsperson den Tragegriff mit vier Fingern umgreifen und somit den Halterahmen handhaben kann und gleichzeitig mit dem Daumen zu dem Eingangsglied gelangt, um über dieses die unbelasteten Haltebolzen zu verschieben. Dabei wird die Betätigung sehr einfach, wenn das Eingangsglied in der Art eines Druckkolbens ausgebildet ist, der in einer Zylinderführung in dem Gehäuse geführt und an seinem in das Gehäuse weisenden Endbereich mit den Lenkern gelenkig verbunden ist.

Sowohl raum- wie auch gewichtssparend wirkt es sich aus, wenn der Halterahmen im Querschnitt ein Hutprofil mit einer Kammer aufweist, die Teil des Gehäuses ist.

Ein relativ reibungsfreies Verschwenken der Schwenkhebel wird durch die Verwirklichung der in Anspruch 17 vorgeschlagenen Maßnahmen erreicht.

Die nach Anspruch 18 vorgeschlagenen Maßnahmen führen zu einem optimalen Bewegungsablauf bei der Betätigung der Betätigungseinrichtung.

In der Zeichnung ist ein nachfolgend näher beschriebenes Ausführungsbeispiel der Erfindung dargestellt. Es zeigt:

Figur 1 eine aus einem Halterahmen und einer Anhängekupplung bestehende Einheit in einem Lochrahmen in Draufsicht,

Figur 2 eine Vorderansicht der Einheit von Figur 1, in der der Halterahmen in dem Lochrahmen vertikal gesichert ist,

Figur 3 eine Vorderansicht des Halterahmens mit einem Tragegriff in einer Betriebsstellung und

Figur 4 eine Draufsicht auf einen Teil des Halterahmens und den Tragegriff.

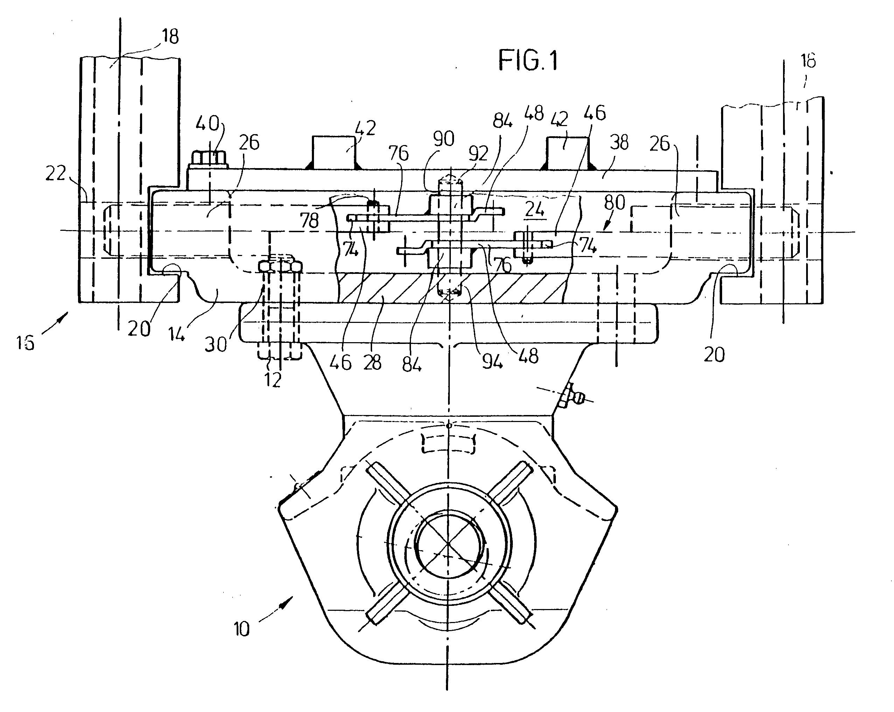

Aus Figur 1 ist ein mit einer Anhängekupplung 10 über Schrauben 12 verbundener Halterahmen 14 ersichtlich, der in einem Lochrahmen 16 vertikal verschieblich geführt ist.

Dieser Lochrahmen 16 besteht aus zwei senkrecht an einem nicht gezeigten Getriebegehäuse eines ebenfalls nicht dargestellten Ackerschleppers angeschraubten Lochschienen 18, die in waagrechter Richtung einen Abstand zueinander aufweisen und die an den sich einander zugelegenen Innenseiten mit jeweils einer ebenfalls senkrecht verlaufenden Längsnut 20 versehen sind.

Von den Längsnuten 20 bis zu den Außenseiten der Lochschienen 18 erstreckt sich eine Vielzahl von in vertikaler Richtung normalerweise den gleichen Abstand zueinander aufweisenden Bohrungen 22, die, wie später noch beschrieben wird, zur Verbindung des Lochrahmens 16 mit dem erfindungsgemäßen Halterahmen 14 dienen.

Wenn an dieser Stelle ausgeführt ist, daß sich der Lochrahmen 16 vertikal erstreckt, so soll damit jedoch nicht die Möglichkeit ausgeschlossen werden, den Lochrahmen 16 geneigt oder horizontal anzuordnen. Ferner kann dieser Lochrahmen 16 mit dem Halterahmen 14 auch an einem anderen Ort als an dem Getriebegehäuse eines Ackerschleppers angeordnet werden. So wäre es denkbar, den Lochrahmen 16 mit dem Halterahmen 14 an der Vorderseite eines Ackerschleppers, an einem sonstigen Zugfahrzeug, an einem Straßenbaufahrzeug oder an einer Erntemaschine anzubringen. In der Regel wird man einen derartigen Lochrahmen 16 zusammen mit dem erfindungsgemäßen Halterahmen 14 und der Anhängekupplung 10 an der Rückseite eines Ackerschleppers anbauen, da an einen Ackerschlepper stets Maschinen oder Anhänger angehängt werden, deren Ankuppelhöhe am Kuppelpunkt unterschiedlich ist und die nur über eine vertikale Verstellung der Anhängekupplung 10 ausgeglichen werden kann.

Die Anhängekupplung 10 ist ein handelsübliches Bauteil und kann sowohl in selbsttätiger wie auch in nicht selbsttätiger Bauart verwendet werden. Insbesondere spielen die Bauart und der Verwendungszweck keine Rolle für die Erfindung. Auf nähere Ausführungen zu der Anhängekupplung 10 kann demnach verzichtet werden.

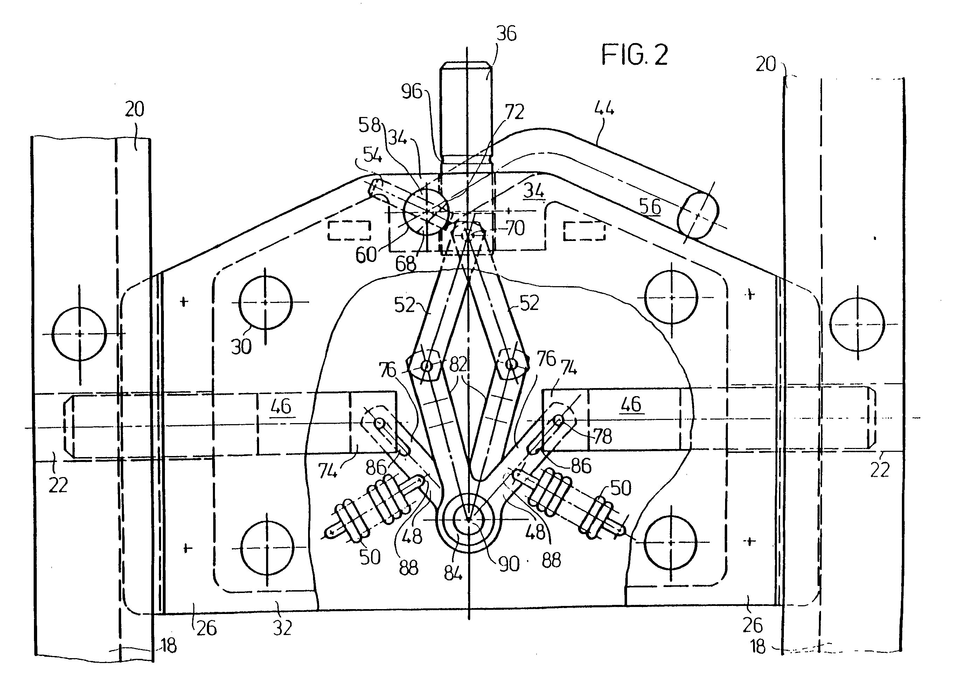

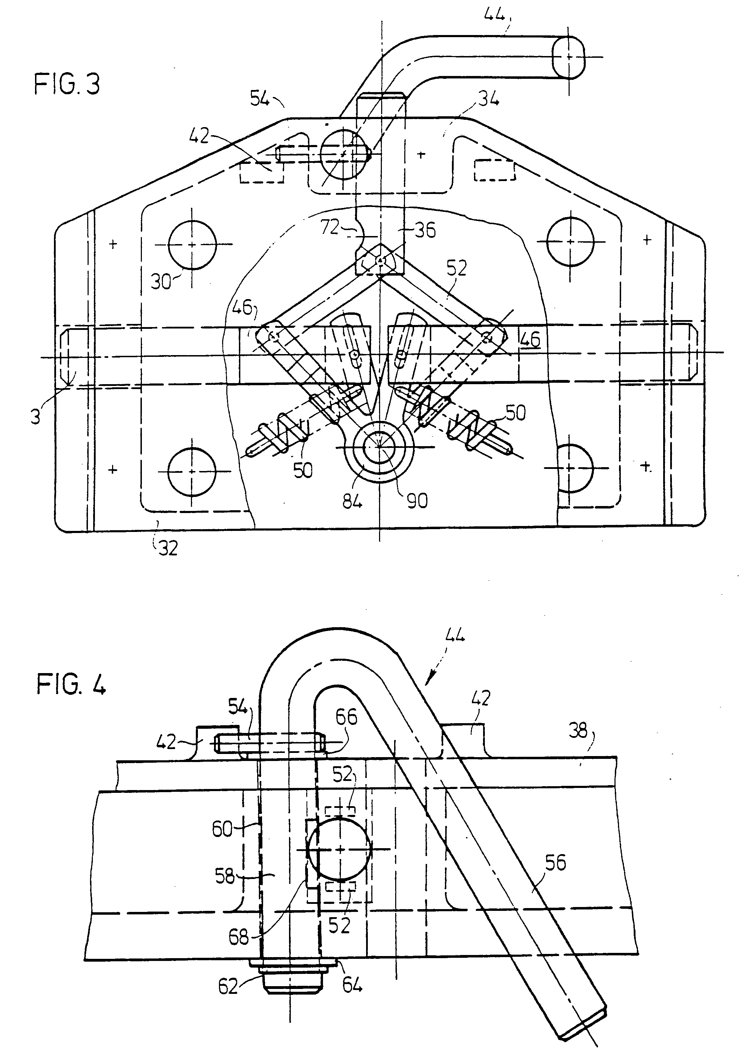

Der Halterahmen 14 weist ein Gehäuse 24 mit einem im Horizontalschnitt hutförmigen Querschnitt auf, das sich im wesentlichen in zwei Wände 26 und einen diese verbindenden Bodenteil 28 unterteilt, die jedoch allesamt einen einzigen gegossenen oder geschweißten Teil bilden. Die Form und die Größe der Wände 26 in der Horizontalen, also der Zeichnungsebene der Figur 1, entspricht im wesentlichen der Größe und der Form der Längsnuten 20 in dieser Ebene. Über die Längsnuten 20 ist der Halterahmen 14 in einer senkrecht zu der Zeichnungsebene verlaufenden Ebene gleitend geführt. Auf das Gehäuse 24 und somit den gesamten Halterahmen 14 wirkende Zug- und Druckkräfte wirken im wesentlichen in der Zeichnungsebene. Der Bodenteil 28 ist mit mehreren Bohrungen 30 oder Gewindebohrungen versehen, in die die Schrauben 12 zum Halten der Anhängekupplung 10 eingesetzt werden. Mit Blick auf die Figuren 2 und 3 kann man zudem erkennen, daß das Gehäuse 24 in der vertikalen Ebene die Form eines Rechteckes mit einem darauf aufgesetzten Trapez einnimmt. Die untere Kante des Gehäuses 24 verläuft bei diesem Ausführungsbeispiel senkrecht zu den Innenseiten der Lochschienen 18. Aus den Figuren 2 und 3 ist ferner zu erkennen, daß sich die Wände 26 in der Form eines Randes 32 über den gesamten Umfang des Gehäuses 24 mit gleichbleibender Höhe erstrecken, und zwar mit Blick auf Figur 1 von dem Bodenteil 28 aus nach vorne, wenn man davon ausgeht, daß der in Figur 1 gezeigte untere Bereich zu der Rückseite und der obere Bereich zu der Vorderseite des Ackerschleppers zeigt. In seinem in den Figuren 2 und 3 oberen Bereich erfährt der Rand 32 eine Verbreiterung zu einem Block 34, der, wie später noch genauer beschrieben wird, der gleitenden Aufnahme eines in der Art eines Druckknopfes gestalteten Eingangsgliedes 36 dient. Wie wieder aus Figur 1 entnommen werden kann, ist der vordere Endbereich des Gehäuses 24 durch einen Deckel 38, der über Schrauben 40 an dem Rand 32 des Gehäuses angeschraubt ist, verschlossen. Zwischen dem Deckel 38 und dem Gehäuse 24 kann zusätzlich Dichtungsmasse oder eine Dichtung vorgesehen sein, durch die ein vollkommen wasserdichtes Abschließen des Gehäuses 24 bewirkt wird, die jedoch der Einfachheit wegen nicht dargestellt ist. Der Deckel 38 kann aus Kunststoff oder Blech hergestellt sein. An seiner Vorderseite, die gleichzeitig seine Außenseite darstellt, sind zwei Nocken 42, die einen Teil einer Arretierung 54, 42 bilden, angeschraubt oder angeschweißt, deren Funktion weiter unten noch erläutert wird. Zwar liegen diese Nocken 42 oberhalb der Aufbruchstelle in Figur 1 und wären somit dort nicht sichtbar; sie sind aber eingezeichnet, um dem Betrachter deren genaue Lage zu vermitteln. Die Größe und das Profil des Deckels 38 in einer vertikalen Ebene entsprechen im wesentlichen denen des Bodenteils 28.

Im folgenden wird Bezug genommen auf das in Figur 2 Gezeigte. Man sieht dort außerhalb des Gehäuses 24 einen Tragegriff 44 und das Eingangsglied 36 und innerhalb durch den Aufbruch des Bodenteils 28 im wesentlichen zwei Haltebolzen 46, zwei als Winkelhebel ausgebildete Schwenkhebel 48, zwei Federn 50 und zwei Lenker 52. Schließlich ist als nicht sichtbar gezeichnet ein Spannstift oder Bolzen 54 zu erkennen, der sich von einem Teil des Tragegriffes 44 aus erstreckt. Das Eingangsglied 36, die Schwenkhebel 48, die Federn 50 und die Lenker 52 bilden somit eine Betätigungseinrichtung.

Der Tragegriff 44 nimmt, wie man insbesondere unter Hinzuziehung von Figur 4 erkennen kann, die Form eines V ein und gliedert sich in einen Griffteil 56 und in einen Sicherungsteil 58, wobei sich der Sicherungsteil 58 als Wellenende senkrecht zu dem Gehäuse 24 und dem Deckel 38, also von vorne nach hinten, erstreckt und der Griffteil 56 zu diesem unter einem Winkel von ca. 45° verläuft. Der Griffteil 56 ist fernerhin länger und ungefähr auf der Hälfte seiner Länge in Richtung auf die Oberseite des Gehäuses 24 zu gekröpft, so daß er auf dieser in einer Außerbetriebsstellung angelegt werden kann.

Der Sicherungsteil 58 erstreckt sich durch eine den Deckel 38, den Block 34 und den Bodenteil 28 durchdringende Bohrung 60 und kann dieser gegenüber verschwenkt werden. In seinen rückwärtig über den Bodenteil 28 überstehenden Endbereich ist auf dem Umfang eine nicht näher zu erkennende Ringnut eingedreht, in die ein Sicherungsring 62 eingesetzt ist, wobei sich zwischen dem Sicherungsring 62 und dem Bodenteil 28 zusätzlich eine Scheibe 64 befindet. Dies ist der Übersichtlichkeit wegen nur in Fig. 4 gezeigt. Der über den Deckel 38 überstehende Endbereich ist von einer nicht ersichtlichen Bohrung durchdrungen, die kraftschlüssig den Bolzen 54 aufnimmt, der in seiner Länge derart bemessen ist, daß er bei einem bestimmten Schwenkmaß des Tragegriffes 44 an einem der Nocken 42 zur Anlage kommt und ständig beim Verschwenken des Tragegriffes 44 an einer zwischen dem Bolzen 54 und dem Deckel 38 befindlichen Scheibe 66 mehr oder weniger entlang gleitet. Der Sicherungsteil 58 ist nach alledem axial durch den Sicherungsring 62 und den Bolzen 54 gehalten. Außerdem weist der Sicherungsteil 58 zwischen der Ringnut und der Bohrung, also auf dem in dem Block 34 gelegenen Bereich, eine Einfräsung oder Abflachung 68 auf, die einen rechteckigen oder quadratischen Querschnitt besitzt.

Das Eingangsglied 36 ähnelt in seiner Funktion und in seiner Form einem Druckknopf oder einem Druckkolben und ist als Rundzylinder ausgeführt. Es ist in einer Bohrung geführt, die sich in dem Block senkrecht zu der den Sicherungsteil 58 aufnehmenden Bohrung und insgesamt vertikal erstreckt. Diese Bohrung ist insbesondere derart angeordnet und bemessen, daß sie die Bohrung 60 für den Sicherungsteil 58 in ihrem Randbereich durchdringt. An ihrem der Innenseite des Gehäuses 24 zugelegenen Endbereich erfährt die Bohrung eine radiale Erweiterung, so daß auf dem in diesem Bereich sich bewegenden Endbereich des Eingangsgliedes 36 ein sich durch diesen diametral erstreckender Stift 70 vorgesehen sein kann, der der schwenkbeweglichen Aufnahme der beiden Lenker 52 dient. Anstatt die Bohrung mit einer radialen Erweiterung zu versehen, wäre es auch möglich, das Eingangsglied 36 an seinem in das Gehäuse 24 hineinreichenden Ende außen abzuflachen, so daß die Lenker 52 hinter dem Umfang des Eingangsgliedes 36 ebenfalls mittels eines Stiftes 70 befestigt werden könnten. Desgleichen könnte das in das Gehäuse 24 hineinreichende Ende des Eingangsgliedes 36 gabelförmig ausgebildet sein und in einer inneren Ausnehmung die Lenker 52 schwenkbar mittels des Stiftes 70 aufnehmen. Das Eingangsglied 36 ist auf seinem Außenumfang mit einer Einbuchtung 72 versehen (siehe auch Figur 3), die einen kreisabschnittförmigen Querschnitt hat und durch ihre Größe, ihre Form und ihre Lage geeignet ist, den Sicherungsteil 58 in dem Bereich, in dem sich die Bohrungen für den Sicherungsteil 58 und das Eingangsglied 36 überschneiden, aufzunehmen. Es ist verständlich, daß, sobald sich der Sicherungsteil 58 durch die Einbuchtung 72 erstreckt, das Eingangsglied 36 keine Axialbewegung mehr vollführen kann. Nimmt der Sicherungsteil 58 seine Lage in der Einbuchtung 72 ein, dann steht das Eingangsglied 36 um ein Maß über den Block 34 nach außen über, das ungefähr dem Zweifachen der Länge des Eingangsgliedes 36 entspricht, die von dem Block 34 umgriffen wird. Der Sicherungsteil 58 und das Eingangsglied 36 arbeiten demnach als Sicherungselement 58, 36 zusammen. Der über den Block 34 und somit über das Gehäuse 24 überstehende Bereich des Eingangsgliedes 36 ist mit einer gelb oder rot markierten Ringnut 96 versehen, und zwar mit einem Abstand zu dem Gehäuse 24, der gewährleistet, daß diese bei geringfügigem Niederdrücken des Eingangsgliedes 36 in den Block 34, also wenn seine Einbuchtung 72 nicht von dem Sicherungsteil 58 beaufschlagt wird, in dem Block 34 verschwindet. Die Ringnut 98 stellt somit eine Sicherheitskennzeichnung dar.

Die Haltebolzen 46 sind gleich lang und im wesentlichen von runder zylindrischer Gestalt und erstrecken sich durch nicht direkt sichtbare Bohrungen in den Wänden 26 von dem Innenraum des Gehäuses 24 aus in einer Richtung senkrecht zu den Innenseiten der Lochschienen 18 und zu den Wänden 26 bis in die Längsnuten 20. Sie sind in den Bohrungen in den Wänden 26 und in den Lochschienen 18 verschieblich und weisen an ihrem im Gehäuse 24 gelegenen Endbereich jeweils ein Gabelende mit einer Aufnahmeöffnung 74 auf, in die sich jeweils ein Arm 76 der Schwenkhebel 48 erstreckt. Im Bereich der Aufnahmeöffnung 74 erstreckt sich diametral durch den Endbereich des Haltebolzens 46 ein Stift 78, dessen Aufgabe später erläutert wird. Ferner sind die Haltebolzen 46 ausgehend von ihrem in dem Gehäuse 24 gelegenen Ende auf ungefähr 2/5 ihrer Länge um die Hälfte ihrer Breite abgefräst, so daß sie dort nur einen Halbrund 80 bilden. Diese Maßnahme ist angebracht, um den Schwenkhebeln 48 ausreichend Freiraum für ihre Bewegungen zu geben.

Die Schwenkhebel 48 setzen sich jeweils außer aus dem mit den Haltebolzen 46 verbundenen Arm 76 aus einem weiteren Arm 82 und einer Lagerbüchse 84 zusammen. Sie sind in ihrer Form und ihrer Größe identisch ausgebildet, werden aber spiegelbildlich eingebaut. Der Arm 76 und der weitere Arm 82 erstrecken sich radial von der Lagerbüchse 84 fort und sind auf diese aufgeschweißt oder aufgelötet. Der mit dem Haltebolzen 46 verbundene Arm 76 weist zum Übergreifen des Stiftes 78 eine Längsnut 86 auf und ist ungefähr auf seiner halben Länge zwischen dem unteren Ende der Längsnut 86 und der Lagerbüchse 84 mit einer Öffnung 88 versehen. Der weitere Arm 82 ist um ungefähr seine Materialstärke zweimal gegensinnig abgekröpft, damit er, ohne schräggelegt werden zu müssen, sich bis nach oben an den Außenumfang des Eingangsgliedes 36 erstrecken kann. Die Lagerbüchse 84 weist nur eine geringe axiale Erstreckung auf und ist auf einem eine Lagerachse darstellenden Lagerbolzen 90 gelagert, der sich zwischen dem Deckel 38 und dem Bodenteil 28 erstreckt und in diesen mittels jeweils einer Paßsackbohrung 92, 94 unverrückbar gehalten ist. Er befindet sich zudem unterhalb einer die Längsmittenachsen der Haltebolzen 46 verbindenden Geraden.

Die als Zugfedern ausgebildeten Federn 50, die sowohl als Stahlfedern als auch aus Kunststoffspannern gebildet sein können, greifen einenends in die in dem Arm 76 vorgesehene Öffnung 88 ein und übergreifen anderenends einen in der Zeichnung nicht wiedergegebenen und sich zwischen dem Dekkel 38 und dem Bodenteil 28 erstreckenden Halter, so daß sie infolge einer von dem Halter weggerichteten Bewegung des Armes 76 gespannt werden. Sie sind ebenfalls gleich ausgebildet und greifen gleichermaßen an den beiden Schwenkhebeln 48 an.

Schließlich sind die zwei Lenker 52 vorgesehen, die sich zwischen dem in das Gehäuse 24 eintretenden Endbereich des Eingangsgliedes 36 und den Schwenkhebeln 48 erstrecken und die anstatt der weiteren Arme 82 gegebenenfalls gekröpft sein können, um eine spannungslose Verbindung zwischen dem Eingangsglied 36 und den Schwenkhebeln 48 herstellen zu können. Die Lenker 52 sind an ihren beiden Endbereichen mit jeweils einer nicht näher ersichtlichen oberen und einer unteren Bohrung versehen, wobei die oberen Bohrungen den Stift 70 in dem unteren und in das Gehäuse 24 weisenden Endbereich des Eingangsgliedes 36 übergreifen. Über die unteren Bohrungen wird eine Verbindung mit dem jeweils zugeordneten Schwenkhebel 48 erreicht, wozu jeweils der weitere Arm 82 der Schwenkhebel 48 an seinem oberen Endbereich mit einer Bohrung ausgestattet ist, die mit der in dem Lenker 52 angeordneten unteren Bohrung in Fluchtung gebracht werden und über eine nicht dargestellte Schraube verbunden werden kann.

Die Anordnung der Schwenkhebel 48 ist derart getroffen, daß die Längsachse der Lagerbüchsen 84 und die des Lagerbolzens 90 direkt unterhalb des Eingangsgliedes 36 zu liegen kommt. Denkt man sich eine Verbindungslinie zwischen der Längsachse der Lagerbüchsen 84 und der Längsachse des Eingangsgliedes 36 und blickt man von hinten auf den Halterahmen 14, dann erstreckt sich der Arm 76 des einen Schwenkhebels 48 von der zugehörigen Lagerbüchse 84 unter einem Winkel von ca. 45 Grad nach rechts außen und nach oben bis zu dem rechten Haltebolzen 46 und geht dort über die Längsnut 86 und den Stift 78 eine Verbindung mit diesem ein, während sich der weitere Arm 82 von der Lagerbüchse 84 aus schräg nach links außen und nach oben erstreckt, bis sich die Bohrung in dem oberen Endbereich des Schwenkhebels 48 mit der unteren Bohrung des zugehörigen Lenkers 52 überdeckt und der Lenker 52 mit dem Schwenkhebel 48 schwenkbar über die Schraube verbunden werden kann. Der diesem einen Schwenkhebel 48 zugeordnete Lenker 52 erstreckt sich dann von einem links neben der genannten Verbindungslinie liegenden Punkt nach oben auf die Verbindungslinie zu bis zu dem Verbindungspunkt an dem Stift 70. Der Arm 76 des anderen Schwenkhebels 48 erstreckt sich von der Lagerbüchse 84 aus schräg nach links außen und nach oben, bis seine Längsnut 86 den Stift 78 auf dem linken Haltebolzen 46 übergreift, während sich der weitere Arm 82 von der Lagerbüchse 84 aus nach rechts außen und nach oben bis zu einem Punkt rechts neben der Verbindungslinie erstreckt, an dem seine Bohrung in dem oberen Endbereich mit der unteren Bohrung des anderen Lenkers 52 fluchtet und ebenfalls über eine Schraube oder dergleichen verbunden werden kann. Durch die Wirkung der Federn 50 werden die Schwenkhebel 48 stets so vorgespannt, daß sich die weiteren Arme 82 auf die Verbindungslinie zwischen der Lagerbüchse 84 und dem Eingangsglied 36 zubewegen. Die Federn 50 werden jedoch bereits wirkungslos, bevor die Längsachsen der weiteren Arme 76 mit der Verbindungslinie zusammenfallen, so daß die Lenker 52 mit den weiteren Armen 82 stets ein bereits geringfügig ausgeknicktes Gestänge bilden, das jederzeit weiter geknickt werden kann. Wenn sich die Federn 50 so weit zusammengezoghen haben, daß sie auf Block sitzen, haben sie über die Schwenkhebel 48 die Haltebolzen 46 so weit nach außen verschoben, daß sie über die Wände 26 überstehen und in die in den Lochschienen 18 vorgesehenen Bohrungen 22 eintreten können.

Ausgehend von dem Vorbeschriebenen stellt sich die Funktion des Halterahmens 14 wie folgt dar.

Es wird davon ausgegangen, daß die Federn 50 die Haltebolzen 46 in ihre außen über die Wände 26 vorstehende Stellung verschoben haben, daß demgemäß das Eingangsglied 36 über die Lenker 52 nach oben gedrückt worden ist, so daß die Einbuchtung 72 mit der Bohrung 60 fluchtet, und der Tragegriff 44 mit Blick auf Figur 2 nach rechts geschwenkt worden ist, so daß sein Sicherungsteil 58 in die Einbuchtung 72 eintritt. Dies bedeutet, daß das Eingangsglied 36 einen Formschluß mit dem Sicherungsteil 58 eingeht und gegen ein Niederdrücken gesperrt ist. Analog dem eingangs Beschriebenen nimmt der Tragegriff 44 dann seine Außerbetriebsstellung ein. Ferner soll sich der Halterahmen 14 bereits in dem Lochrahmen 16 in einer Ausgangsstellung befinden, wozu die Wände 26 von den Längsnuten 20 in den Lochschienen 18 aufgenommen werden und sich die Haltebolzen 46 in ein Paar sich gegenüberliegender Bohrungen 22 zweier Lochschienen 18 erstrecken. Diese Ausgangsstellung ist in den Figuren 1 und 2 wiedergegeben.

Zum Verschieben des Halterahmens 14 und somit der Anhängekupplung 10 entlang den Längsnuten 20 in eine andere Stellung als die Ausgangsstellung wird zunächst der Tragegriff 44 an seinem Griffteil 56 angehoben und mit Blick auf Figur 2 im Gegenuhrzeigerdrehsinn verschwenkt. Währenddessen verschwenkt der Sicherungsteil 58 so weit, daß die an ihm angebrachte Abflachung 68 parallel zu der Längsachse des Eingangsgliedes 36 zu liegen kommt und sich das Eingangsglied 36 in der Abflachung 68 erstreckt, d. h. der Formschluß zwischen dem Sicherungsteil 58 und dem Eingangsglied 36 ist aufgehoben. Gleichzeitig ist auch der Bolzen 54 an einem der Nocken 42 zur Anlage gekommen und beendet die Schwenkbewegung des Tragegriffes 44. Bei dem in der Zeichnung dargestellten Ausführungsbeispiel befindet sich der Griffteil 56 nunmehr fast oberhalb des auf der vorerwähnten Verbindungslinie liegenden Schwerpunkts der aus dem Halterahmen 14 und der Anhängekupplung 10 bestehenden Einheit. Diese Einheit 10, 14 kann nunmehr über den Tragegriff 44 angehoben werden, wodurch die Gewichtsbelastung der Haltebolzen 46 in den Bohrungen 22 entfällt. Anschließend wird mit dem Daumen der den Tragegriff 44 haltenden Hand das Eingangsglied 36 niedergedrückt, so daß sich das aus den Lenkern 52 und den weiteren Armen 82 bestehende scherenartige Gestänge spreizt. Die weiteren Arme 82 bewegen sich von der Verbindungslinie weg, während sich die Arme 76 auf diese zubewegen und dabei über die Stifte 78 die Haltebolzen 46 nach innen in das Gehäuse 24 ziehen, und zwar so weit, bis die Haltebolzen 46 nicht mehr von den Bohrungen 22 in den Lochschienen 18 umfangen werden, so daß die Einheit 10, 14 in den Längsnuten 20 verschoben werden kann, was dadurch angezeigt wird, daß die Sicherheitskennzeichnung 96 auf dem Umfang des Eingangsgliedes 36 in der das Eingangsglied 36 aufnehmenden Bohrung verschwindet. Durch das Niederdrücken des Eingangsgliedes 36 und somit das Verschwenken der Schwenkhebel 48 werden die Federn 50 gespannt. Die Bedienungsperson kann nun die Einheit 10, 14 durch das Niedergedrückthalten des Eingangsgliedes 36 mittels des Tragegriffes 44 in den Längsnuten 20 in eine andere Stellung verschieben. Sobald diese Stellung erreicht ist, hält sie die Einheit 10, 14 in ihrer Lage und läßt lediglich das Eingangsglied 36 los. Sodann werden durch die Wirkung der Federn 50 die weiteren Arme 82 wieder auf die Verbindungslinie zugeschwenkt, wodurch über die Arme 76 die Haltebolzen 46 nach außen verschoben werden und schließlich in die Bohrungen 22 eintreten und somit die Einheit gegenüber dem Lochrahmen 16 festlegen. Sollten die Haltebolzen 46 nicht exakt mit den Bohrungen 22 fluchten, dann kann das Eingangsglied 36 trotzdem losgelassen werden, so daß bei einem geringfügigen Auf- oder Abbewegen des Halterahmens 10 in den Längsnuten 20 die Haltebolzen 46 selbsttätig in die Bohrungen 22 einrücken. Abschließend wird der Tragegriff 44 wieder im Uhrzeigerdrehsinn verschwenkt, so daß der Sicherungsteil 58 in die Einbuchtung 72 eintritt und ein unbeabsichtigtes Verschieben des Eingangsgliedes 36 vermieden wird. In dieser Stellung ist die Sicherheitskennzeichnung 96 auf dem Eingangsglied 36 wieder zu sehen, so daß sich die Bedienungsperson visuell davon überzeugen kann, daß die Haltebolzen 46 in die Bohrungen 22 eingeschoben sind.

Abweichend von dem zuvor Beschriebenen kann der Tragegriff 44 auch so angeordnet werden, daß sich in der Außerbetriebsstellung der Griffteil 56 auf der linken anstatt auf der rechten Seite des Eingangsgliedes 36 befindet und der Sicherungsteil 58 auf der rechten anstatt auf der linken Seite des Eingangsgliedes 36 gelegen ist. Selbstverständlich müßten sich auch die Abflachung 68 und die Einbuchtung 72 auf der rechten Seite befinden. Die links des Eingangsgliedes 36 liegende Bohrung könnte durch eine auf der rechten Seite liegende ersetzt werden. Schließlich müßte auch der Bolzen 54 auf der anderen Seite des Sicherungsteils 58 überstehen, so daß er an dem in Figur 1 rechts gelegenen Nocken 42 anschlägt. Der Vorteil all dieser Maßnahmen wäre der, daß die Einheit auch von Linkshändern bequem und sicher angehoben werden kann.

Ferner könnte die aus dem Eingangsglied 36, den Lenkern 52, den Schwenkhebeln 48 und den Federn 50 bestehende Betätigungseinrichtung 36, 52, 48, 50 seitlich der Mitte angeordnet werden, und zwar um ein Maß, das ausreicht, daß der Griffteil 56 bei angehobenem Tragegriff 44 exakt oberhalb des Schwerpunktes der Einheit 10, 14 zu liegen kommt, so daß ein Verkanten der Einheit in dem Lochrahmen 16 von vornherein vollends ausgeschlossen wird.

## Patentansprüche

1. Halterahmen (14) für eine Anhängekupplung (10), der über Haltebolzen (46) in einem Lochrahmen (16) festlegbar ist, mit einer Betätigungseinrichtung (36, 52, 48, 50) zum Bewegen der Haltebolzen (46), einem Sicherungselement (58, 36) zum Verriegeln der Betätigungseinrichtung (36, 52, 48, 50) und mit einem Tragegriff (44), mittels dessen das Sicherungselement (58, 36) betätigbar ist, dadurch gekennzeichnet, daß die Betätigungseinrichtung (36, 52, 48, 50) funktionell getrennt von dem Tragegriff (44) ausgebildet ist.

2. Halterahmen nach Anspruch 1, dadurch gekennzeichnet, daß das Sicherungselement (58, 36) einen Sicherungsteil (58) aufweist, der mit dem Tragegriff (44) verbunden ist.

3. Halterahmen nach Anspruch 1, mit Haltebolzen (46), die unter der Einwirkung mindestens einer Feder (50) stehen, dadurch gekennzeichnet, daß die Feder (50) derart angeordnet ist, daß sie die Haltebolzen (46) stets in Richtung auf den Lochrahmen (16) drückt.

4. Halterahmen nach Anspruch 3, dadurch gekennzeichnet, daß die Feder (50) auf die Betätigungseinrichtung (36, 52, 48, 50) derart wirkt, daß diese aus einer den Halterahmen (14) von dem Lochrahmen (16) lösenden in eine den Halterahmen (14) in dem Lochrahmen (16) festlegende Stellung gedrängt wird.

5. Halterahmen nach Anspruch 1, wobei die Betätigungseinrichtung (36, 52, 48, 50) ein längsverschiebliches Eingangsglied (36) enthält, dessen Stellung von der Stellung der Haltebolzen (46) abhängt und das unter Federeinwirkung steht, dadurch gekennzeichnet, daß die Haltebolzen (46) durch die Längsverschiebung des Eingangsgliedes (36) verstellbar sind.

6. Halterahmen nach Anspruch 5, wobei das Eingangsglied (36) gegenüber einem die Haltebolzen (46) aufnehmenden Gehäuse (24) beweglich ist und sich aus dem Gehäuse (24) durch eine Öffnung heraus erstreckt, dadurch gekennzeichnet, daß die Öffnung das Eingangsglied (36) dichtend umfaßt und einen dem Querschnitt des Eingangsgliedes (36) im Austrittsbereich aus dem Gehäuse (24) entsprechenden Öffnungsquerschnitt aufweist.

7. Halterahmen nach Anspruch 2, dadurch gekennzeichnet, daß der Tragegriff (44) winkelförmig ausgebildet ist und aus dem Sicherungsteil (58) und einem Griffteil (56) besteht.

8. Halterahmen nach Anspruch 2, dadurch gekennzeichnet, daß der Sicherungsteil (58) eine Abflachung (68) aufweist und das Eingangsglied (36) mit einer Einbuchtung (72) versehen ist, wobei der Sicherungsteil (58) in eine erste Stellung, in der das Eingangsglied (36) in der Abflachung (68) verschiebbar ist, und in eine zweite Stellung verschwenkbar ist, in der es in die Einbuchtung (72) eingreift.

9. Halterahmen nach Anspruch 8, der eine Arretierung (54, 42) zum Festlegen des Tragegriffes (44) in seiner den Halterahmen (14) vom Lochrahmen (16) lösenden Stellung, die der ersten Stellung des Sicherungsteils (58) entspricht, aufweist, dadurch gekennzeichnet, daß die Arretierung (54, 42) aus einem sich tangential von dem Tragegriff (44) forterstreckenden Bolzen (54) und einem an dem Gehäuse (24) angeordneten Nokken (42) besteht.

10. Halterahmen nach einem oder mehreren der vorherigen Ansprüche, dadurch gekennzeichnet, daß jeder Haltebolzen (46) schwenkbar an einen Schwenkhebel (48) angreift, daß die Schwenkhebel (48) als Winkelhebel ausgebildet sind und über jeweils einen Lenker (52) schwenkbar an dem längsverschiebbar angeordneten Eingangsglied (36) angreifen, wobei sich die Lenker (52) stets in einer zu der Bewegungsrichtung des Eingangsglieds (36) angewinkelt verlaufenden Richtung erstrekken.

11. Halterahmen nach Anspruch 10, dadurch gekennzeichnet, daß die Schwenkhebel (48) an dem mit den Haltebolzen (46) verbundenen Ende jeweils mit einer Längsnut (86) versehen sind, in denen mit den Haltebolzen (46) verbundene Stifte (78) geführt sind.

12. Halterahmen nach den Ansprüchen 3 und 10, dadurch gekennzeichnet, daß sich zwischen jedem Schwenkhebel (48) und dem Gehäuse (24) die Feder (50) erstreckt.

13. Halterahmen nach einem oder mehreren der vorherigen Ansprüche, dadurch gekennzeichnet, daß das Eingangsglied (36) mit einer Sicherheitskennzeichnung (96) versehen ist, die anzeigt, daß der Halterahmen (14) in dem Lochrahmen (16) festgelegt ist.

14. Halterahmen nach einem oder mehreren der vorherigen Ansprüche, dadurch gekennzeichnet, daß das vom Tragegriff (44) getrennte Eingangsglied (36) in einer Zylinderführung in dem Gehäuse (24) geführt und an seinem in das Gehäuse (24) weisenden Endbereich mit den Lenkern (52) gelenkig verbunden ist.

15. Halterahmen nach einem oder mehreren der vorherigen Ansprüche, dadurch gekennzeichnet, daß das Eingangsglied (36) in der Griffnähe einer Hand von dem Griffteil (56) entfernt angeordnet ist.

16. Halterahmen nach einem oder mehreren der vorherigen Ansprüche, dadurch gekennzeichnet, daß der Halterahmen (14) im Querschnitt ein Hutprofil mit einer Kammer aufweist, die Teil des Gehäuses (24) ist.

17. Halterahmen nach einem oder mehreren der vorherigen Ansprüche, dadurch gekennzeichnet, daß die Schwenkhebel (48) jeweils eine Lagerbüchse (84) aufweisen, die drehbar auf einer Lagerachse (90) gehalten sind, wobei sich die Lagerachse (90) in dem Gehäuse (24) erstreckt.

18. Halterahmen nach einem oder mehreren der vorherigen Ansprüche, dadurch gekennzeichnet, daß die Lagerachse (90) und die Schwenkhebel (48) mit den Lenkern (52) symmetrisch zu der Bewegungsebene des Eingangsgliedes (36) vorgesehen sind.

**Claims**

1. Retaining frame (14) for a trailer coupling (10), which can be fixed in an apertured frame (16) by retaining bolts (46), with an operating device (36, 52, 48, 50) for moving the retaining bolts (46), a safety element (58, 36) for locking the operating device (36, 52, 48, 50) and with a carrying grip (44), by means of which the safety element (58, 36) is operable, characterized in that the operating device (36, 52, 48, 50) is formed functionally separate from the carrying grip (44).

2. Retaining frame according to claim 1, characterized in that the safety element (58, 36) comprises a safety part (58) which is connected to the carrying grip (44).

3. Retaining frame according to claim 1, with retaining bolts (46) which are subject to the action of at least one spring (50), characterized in that the spring (50) is so arranged that it always biases the retaining bolts (46) in the direction of the apertured frame (16).

4. Retaining frame according to claim 3, characterized in that the spring (50) so acts on the operating device (36, 52, 48, 50) that this is urged from a position freeing the retaining frame (14) from the apertured frame (16) into a position fixing the retaining frame (14) in the apertured frame (16).

5. Retaining frame according to claim 1, wherein the operating device (36, 52, 48, 50) includes a longitudinally slidable input member (36), whose position depends on the position of the retaining bolts (46) and which is subject to spring action, characterized in that the retaining bolts (46) are adjustable by the longitudinal sliding of the input member (36).

6. Retaining frame according to claim 5, wherein the input member (36) is movable relative to a housing (24) receiving the retaining bolts (46) and extends out of the housing (24) through an opening, characterized in that the opening closely surrounds the input member (36) and has an opening crosssection corresponding to the cross-section of the input member (36) in the region of emergence from the housing (24).

7. Retaining frame according to claim 2, characterized in that the carrying grip (44) has an angled form and consists of the safety part (58) and a grip part (56).

8. Retaining frame according to claim 2, characterized in that the safety part (58) has a flat (68) and the input member (36) is provided with an indentation (72), the safety part (58) being pivotable into a first position, in which the input member (36) is slidable in the flat (68), and into a second position, in which it engages in the indentation (72).

9. Retaining frame according to claim 8, which has stop means (54, 42) for arresting the carrying grip (44) in its position freeing the retaining frame (14) from the apertured frame (16), which corresponds to the first position of the safety part (58), characterized in that the stop means (54, 42) consists of a pin (54) extending out of the carrying grip (44) tangentially and a cam (42) arranged on the housing (24).

10. Retaining frame according to one or more of the preceding claims, characterized in that each retaining bolt (46) pivotally engages a pivoted lever (48), in that the pivoted levers (48) are formed as angled levers and each engage pivotally via a link (52) with the input member (36) arranged longitudinally slidable, the links extending at all times in a direction inclined relative to the direction of movement of the input member (36).

11. Retaining frame according to claim 10, characterized in that the pivoted levers (48) are each provided with a longitudinal groove (86) at the end connected to the retaining bolts (46), in which grooves pins (78) connected to the retaining bolts (46) are guided.

12. Retaining frame according to claims 3 and 10, characterized in that the spring (50) extends between each pivoted lever (48) and the housing (24).

13. Retaining frame according to one or more of the preceding claims, characterized in that the input member (36) is provided with a safety indicator (96) which shows when the retaining frame (14) is fixed in the apertured frame (16).

14. Retaining frame according to one or more of the preceding claims, characterized in that the input member (36) separate from the carrying grip (44) is guided in a cylindrical guide in the housing (24) and is pivotally connected to the links (52) at its end region directed into the housing (24).

15. Retaining frame according to one or more of the preceding claims, characterized in that the input member (36) is arranged removed from the grip part (56) in the gripping region of a hand.

16. Retaining frame according to one or more of the preceding claims, characterized in that the retaining frame (14) has a hat shape in cross-section, with a chamber, which is part of the housing (24).

17. Retaining frame according to one or more of the preceding claims, characterized in that the pivoted levers (48) each have a bearing bush (84) which is rotatably retained on a bearing pin (90), the bearing pin (90) extending into the housing (24).

18. Retaining frame according to one or more of the preceding claims, characterized in that the bearing pins (90) and the pivoted levers (48) with the links (52) are provided symmetrically to the plane of movement of the input member (36).

## Revendications

1. Cadre de support (14) pour un attelage de remorque (10) qui peut être fixé au moyen de chevilles de support (46) dans un cadre perforé (16), comportant un dispositif d'actionnement (36, 52, 48, 50) pour déplacer les chevilles de support (46), un élément de blocage (58, 36) pour verrouiller le dispositif d'actionnement (36, 52, 48, 50) et une poignée de support (44) au moyen de laquelle l'élément de blocage (58, 36) peut être actionné, caractérisé en ce que le dispositif d'actionnement (36, 52, 48, 50) est constitué de façon à être fonctionnellement séparé de la poignée de support (44).

2. Cadre de support suivant la revendication 1, caractérisé en ce que l'élément de blocage (58, 36) comporte une section de blocage (58) qui est reliée à la poignée de support (44).

3. Cadre de support suivant la revendication 1, comportant des chevilles de support (46) qui sont soumises à l'action d'au moins un ressort (50), caractérisé en ce que le ressort (50) est disposé de façon à exercer constamment une pression sur les chevilles de support (46) en direction du cadre perforé (16).

4. Cadre de support suivant la revendication 3, caractérisé en ce que le ressort (50) agit sur le dispositif d'actionnement (36, 52, 48, 50) de telle façon que celui-ci est repoussé d'une position détachant le cadre de support (14) du cadre perforé (16) dans une position immobilisant le cadre de support (14) dans le cadre perforé (16).

5. Cadre de support suivant la revendication 1, le dispositif d'actionnement (36, 52, 48, 50) comprenant un organe d'entrée (36) mobile longitudinalement dont la position dépend de la position des chevilles de support (46) et qui est soumis à l'action d'un ressort, caractérisé en ce que les chevilles de support (46) sont déplaçables par le déplacement longitudinal de l'organe d'entrée (36).

6. Cadre de support suivant la revendication 5, l'organe d'entrée (36) étant mobile par rapport à un boîtier (24) logeant les chevilles de support (46) et s'étendant à l'extérieur du boîtier (24) par une ouverture, caractérisé en ce que l'ouverture entoure hermétiquement l'organe d'entrée (36) et présente une section droite d'ouverture correspondant à la section droite de l'organe d'entrée (36) dans la zone de sortie du boîtier (24).

7. Cadre de support suivant la revendication 2, caractérisé en ce que la poignée de support (44) a une conformation angulaire et comprend la section de blocage (58) et une section de poignée (56).

8. Cadre de support suivant la revendication 2, caractérisé en ce que la section de blocage (58) présente un aplatissement (68) et l'organe d'entrée (36) comporte un creux (72), la section de blocage (58) pouvant passer par pivotement dans une première position dans laquelle l'organe d'entrée (36) peut se déplacer dans l'aplatissement (68) et dans une seconde position dans laquelle il s'engage dans le creux (72).

9. Cadre de support suivant la revendication 8, qui comporte un dispositif d'arrêt (54, 42) pour bloquer la poignée de support (44) dans sa position séparant le cadre de support (14) du cadre perforé (16), qui correspond à la première position de la section de blocage (56), caractérisé en ce que le dispositif d'arrêt (54, 42) comprend une cheville (54) se prolongeant tangentiellement à partir de la poignée de support (44) et un ergot (42) placé sur le boîtier (24).

10. Cadre de support suivant une ou plusieurs des revendications précédentes, caractérisé en ce que chaque cheville de support (46) est appliquée avec possibilité de pivotement à un levier pivotant (48), en ce que les leviers pivotants (48) sont réalisés sous la forme de leviers coudés et sont appliqués chacun par l'intermédiaire d'une biellette (52) avec possibilité de pivotement à l'organe d'entrée (36) disposé de façon à être mobile longitudinalement, les biellettes (52) s'étendant constamment dans une direction faisant un angle avec la direction de déplacement de l'organe d'entrée (36).

11. Cadre de support suivant la revendication 10, caractérisé en ce que les leviers pivotants (48) comportent chacun, à l'extrémité reliée aux chevilles de support (46), une rainure longitudinale (86), rainures dans lesquelles des broches (78) reliées aux chevilles de support (46) sont guidées.

12. Cadre de support suivant les revendications 3 et 10, caractérisé en ce que le ressort (50) s'étend entre chaque levier pivotant (48) et le boîtier (24).

13. Cadre de support suivant une ou plusieurs des revendications précédentes, caractérisé en ce que l'organe d'entrée (36) comporte une caractérisation de sécurité (96) qui indique que le cadre de support (14) est immobilisé dans le cadre perforé (16).

14. Cadre de support suivant une ou plusieurs des revendications précédentes, caractérisé en ce que l'organe d'entrée (36) séparé de la poignée de support (44) est guidé dans un guide cylindrique dans le boîtier (24) et est articulé aux biellettes (52) à sa zone terminale dirigée vers l'intérieur du boîtier (24).

15. Cadre de support suivant une ou plusieurs des revendications précédentes, caractérisé en ce que l'organe d'entrée (36) est disposé à une distance à portée de main de la section de prise (56).

16. Cadre de support suivant une ou plusieurs des revendications précédentes, caractérisé en ce que le cadre de support (14) présente en section droite un profil de chape avec une chambre qui fait partie du boîtier (24).

17. Cadre de support suivant une ou plusieurs des revendications précédentes, caractérisé en ce que les leviers pivotants (48) comportent chacun un coussinet (84), lesquels coussinets sont maintenus de façon à pouvoir tourner sur un axe d'appui (90), l'axe d'appui (90) s'étendant dans le boîtier (24).

18. Cadre de support suivant une ou plusieurs des revendications précédentes, caractérisé en ce que l'axe d'appui (90) et les leviers pivotants (48) sont prévus avec les biellettes (52) symétriquement par rapport au plan de déplacement de l'organe d'entrée (36).

FIG.1

FIG. 2

EP 0 215 443 B1

FIG. 3

FIG. 4